# EUROPÄISCHE PATENTSCHRIFT

(11) **EP 2 105 354 B1**
(45) Veröffentlichungstag und Bekanntmachung des Hinweises auf die Patenterteilung: **01.09.2010**
(21) Anmeldenummer: 08021981.9
(22) Anmeldetag: 18.12.2008
(51) Int. Cl.: B60R 19/26, B60R 19/34

(54) **Crashbox**
Crashbox
Crashbox

(30) Priorität: 26.03.2008 DE 102008015890
(43) Veröffentlichungstag der Anmeldung: 30.09.2009
(73) Patentinhaber: Benteler Automobiltechnik GmbH, 33104 Paderborn (DE)
(72) Erfinder: Handing, Christian Dr., 33449 Langenberg (DE); Dörr, Jochen Dr., 33014 Bad Driburg (DE)
(74) Vertreter: Ksoll, Peter

(56) Entgegenhaltungen:
- WO-A-2007/031226
- WO-A-2007/066592
- AT-B- 61 395
- DE-U1- 9 310 036
- FR-A- 2 873 640

## Beschreibung

Die Erfindung betrifft eine Crashbox zur Eingliederung zwischen dem Stoßfängerquerträger und einem Fahrzeuglängsträger eines Kraftfahrzeugs.

Stoßfängersysteme werden bei Kraftfahrzeugen standardmäßig sowohl frontals auch heckseitig eingebaut, um die Stoßenergie kleinerer Anprallvorgänge abzufangen, so dass die eigentliche Tragstruktur des Kraftfahrzeugs möglichst nicht beschädigt wird. Ein Stoßfängersystem besteht aus einem Querträger, der unter Eingliederung von Crashboxen quer zu den Längsträgern des Kraftfahrzeugrahmens festlegbar ist. Der Querträger dient dazu, die aus einem Anprall resultierende Energie in die Crashboxen einzuleiten, wo die Stoßenergie üblicherweise in Verformungsarbeit umgewandelt werden soll. Das Stoßfängersystem wird dabei so aufeinander abgestimmt, dass die Crashbox jeweils möglichst mittig auf dem Längsträger des Kraftfahrzeugs sitzt und die Stoßenergie über den Querträger mit einem möglichst geringen Biegemoment in die Crashboxen und damit auf die Längsträger eingeleitet wird.

Crashboxen werden heute vielfach über Flanschplatten mit den Längsträgern verschraubt. Eine im Stand der Technik bekannte und in der Praxis bewährte Crashbox in Schalenbauweise geht aus der DE 100 14 469 A1 hervor. Die Crashbox ist so ausgelegt, dass sie sich unter einer definierten Kraft plastisch verformt und dabei eine vorgegebene Energiemenge aufnehmen kann.

Aus der gattungsbildenden DE 43 45 550 C2 ist eine Crashbox bekannt, die aus zwei ineinander geführten Rohren besteht, wobei das äußere Rohr mindestens einen nach innen vorspringenden, verstärkten Einformung aufweist. Bei einem Anprall verschiebt sich das innere Rohr in das äußere Rohr. Hierbei wird die Wand des inneren Rohrs an dem Einformung verformt, um die Anprallenergie abzubauen.

Auch aus der DE 195 37 205 C2 geht eine Crashbox hervor mit einem Außenrohr und einem Innenrohr, die konzentrisch ineinander gefügt und relativ zueinander bewegbar sind. Das Außenrohr und das Innenrohr können aus Stahl oder aus Aluminium oder aus einer Paarung dieser beiden Werkstoffe bestehen.

Der Erfindung liegt ausgehend vom Stand der Technik die Aufgabe zu Grunde, eine Crashbox funktional zu verbessern sowie vorhandenes Potenzial zur Gewichtseinsparung und das Energieabsorptionsvermögen im Gesamtkonzept des Stoßfängersystems besser zu nutzen.

Die Lösung dieser Aufgabe besteht nach der Erfindung in einer Crashbox mit den Merkmalen von Anspruch 1.

Die Lösung dieser Aufgabe besteht nach der Erfindung in einer Crashbox gemäß den Merkmalen von Anspruch 1, bei der der Außenrohrkörper aus einem gehärteten Stahlwerkstoff besteht.

Die Erfindung sieht den Einsatz eines Außenrohrkörpers aus einem hochfesten, gehärteten Stahlwerkstoff vor. Der Außenrohrkörper umgreift den Innenrohrkörper zumindest bereichsweise bzw. auf einem Teilabschnitt der Länge des Innenrohrkörpers. Der Außenrohrkörper fungiert als Formwerkzeug, durch welches der Innenrohrkörper bei einem Anprall hindurchgeschoben wird.

Bei der Relatiwerlagerung des Innenrohrkörpers durch den Außenrohrkörper wird der Innenrohrkörper verformt und hierdurch die Anprallenergie abgebaut. Da der Außenrohrkörper aus einem gehärteten Stahlwerkstoff besteht, kann dieser insgesamt kompakter bzw. kürzer ausgelegt sein und/oder aus einem dünneren Werkstoff als der Innenrohrkörper bestehen. Hierdurch ist eine Gewichtseinsparung an der Crashbox möglich. Weiterhin trägt diese Maßnahme zu einer Erhöhung des Energieabsorptionsvermögens im Gesamtkonzept des Stoßfängersystems bei.

Eine Gewichtsersparnis an frontseitigen Stoßfängersystemen, also so genannten Frontbumpern, ist besonders interessant, da Fahrzeuge mit Frontmotor in der Regel fahrdynamisch gesehen auf der Vorderachse zu schwer sind und der Frontbumper noch vor der Achse liegt. Die erfindungsgemäße Crashbox in der aufgezeigten Materialkombination ermöglicht eine maximale Energieaufnahme bei minimaler Dichte, wobei der Innenrohrkörper in einem Crashfall vollständig oder nahezu vollständig bis an die Grenzen der Formgebungsmöglichkeiten umgeformt wird, ohne das Risse im Material auftreten.

Vorteilhafte Ausgestaltungen des grundsätzlichen Erfindungsgedankens sind Gegenstand der abhängigen Ansprüche 2 bis 20.

Der als Umformwerkzeug fungierende Außenrohrkörper soll unter Belastung beim Umformen des Innenrohrkörpers möglichst wenig elastisch auffedern. Demzufolge kommt ein gehärteter Stahlwerkstoff zum Einsatz, der eine hohe dichtebezogene Festigkeit und kaum plastisches Formänderungsvermögen besitzt.

Im Rahmen der Erfindung wird ein Außenrohrkörper als besonders vorteilhaft angesehen, der aus einem gehärteten Stahlwerkstoff mit einer 0,2 %-Dehngrenze Rp_{0,2} von größer oder gleich 550 N/mm² besteht. Insbesondere wird ein Außenrohrkörper aus einem Stahlwerkstoff mit einer 0,2 %-Dehngrenze Rp_{0,2} von größer oder gleich 800 N/mm² als vorteilhaft angesehen.

Längsseitig schließt sich an den Außenrohrkörper eine Flanschplatte an. Die Flanschplatte dient zur direkten oder indirekten Anbindung bzw. Festlegung der Crashbox an einen Längsträger. Auch die Flanschplatte besteht aus einem gehärteten Stahlwerkstoff mit einer 0,2 %-Dehngrenze Rp_{0,2} von größer oder gleich 550 N/mm², insbesondere mit einer Dehngrenze Rp_{0,2} von größer oder gleich 800 N/mm².

Die Flanschplatte kann einstückiger Bestandteil des Außenrohrkörpers sein. Andere ebenfalls für die Praxis vorteilhafte Ausgestaltungen sehen vor, dass die Flanschplatte mit dem Außenrohrkörper gefügt ist.

Der Innenrohrkörper wird bei einem Anprall im Außenrohrkörper verlagert. Hierbei wird die Wand des Innenrohrkörpers durch den Außenrohrkörper verformt und auf diese Weise die Anprallenergie abgebaut bzw. umgewandelt. Der vorhandene Bauraum im Stoßfängersystem kann vorteilhaft ausgenutzt werden, wenn der Außenrohrkörper und der im Außenrohrkörper angeordnete Längenabschnitt des Innenrohrkörpers innerhalb eines Längsträgers des Kraftfahrzeugs angeordnet ist. Die Crashbox stützt sich hierbei mit der Flanschplatte an dem Längsträger ab.

Der Innenrohrkörper kann aus einem Stahlwerkstoff bestehen, insbesondere aus einem ungehärteten Stahlwerkstoff mit duktilen Werkstoffeigenschaften.

Möglich ist es auch, dass der Innenrohrkörper aus einem Leichtmetallwerkstoff, insbesondere aus Aluminium oder Magnesium, besteht. Der Einsatz eines Innenrohrkörpers aus einem Leichtmetallwerkstoff lässt eine weitere Gewichtsersparnis zu.

Zur Gewichtsersparnis trägt weiterhin bei, wenn die Wand des Außenrohrkörpers dünner ist als die Wand des Innenrohrkörpers.

Bei einer für die Praxis besonders vorteilhaften Ausgestaltung weist der Innenrohrkörper zumindest einen Längenabschnitt mit einer umfangsseitigen Einschnürung auf, wobei am Außenrohrkörper zumindest ein Formelement vorgesehen ist, welches in die Einschnürung eingreift. Die Einschnürung erstreckt sich vorzugsweise ringförmig um den gesamten Umfang des tnnenrohrkörpers. Das Formelement ist durch eine oder mehrere nach innen gerichtete Einformungen aus der Wand des Außenrohrkörpers geformt. Die Einformung kann sich ringförmig über den gesamten Umfang des Außenrohrkörpers erstrecken. Es können auch mehrere auf dem Umfang des Außenrohrkörpers auf einem Teilkreis versetzt angeordnete, kalottenartige Einformungen vorgesehen sein.

Der Innenrohrkörper und der Außenrohrkörper können im Kontaktbereich vollflächig aneinander liegen. Bei einer alternativen Ausführungsform ist im Überlappungsbereich des Innenrohrkörpers und des Außenrohrkörpers eine Freifläche nach Art eines Ringraums vorhanden, in dem sich der innere Rohrkörper und der Außenrohrkörper nicht berühren. In Einschubrichtung des Innenrohrkörpers gesehen ist die Freifläche dem Kontaktbereich zwischen dem Innenrohrkörper und dem Außenrohrkörper vorgelagert. Je nach konstruktiver Ausgestaltung des Kontaktbereichs und der bei der Verschiebung des Innenrohrs in Kontakt gelangenden Flächen und der zeitlichen Abfolge des Kontakts kann so eine Vergleichmäßigung des Kraftverlaufes beim Umformvorgang des Innenrohrkörpers erreicht werden.

Bei der Verlagerung des Innenrohrkörpers im Außenrohrkörper treten im Bereich des Einzugs bzw. der Einschnürung im Innenrohrkörper die maximalen Spannungen auf. Diese sind zurückzuführen auf die tangentialen Zugspannungen. Wird der Außenrohrkörper in der Wanddicke nach den hier auftretenden Spannungen dimensioniert, führt dies zu einer Überdimensionierung in anderen Bereichen des Außenrohrkörpers, insbesondere in solchen Bereichen, wo üblicherweise überwiegend axiale Zugspannungen aufgenommen werden. Um hier zusätzliches Gewicht einzusparen, kann der Außenrohrkörper zumindest partiell mit einer Verstärkung versehen sein. Insbesondere eine Verstärkung in Form einer Armierung, bevorzugt aus einer Faserverstärkung, ist für die Praxis vorteilhaft. Die Verstärkung ist vorzugsweise außen am Außenrohrkörper im Bereich des Formelements vorgesehen. Als Verstärkung kommt insbesondere eine Faser- oder Faserverbundverstärkung zur Anwendung auf Basis von Kunststoff, Keramik oder Metallfaserstoffen. Eine Verstärkung in Form einer radialen Wicklung aus einem Faserverbundwerkstoff im Bereich der Formelemente am Außenumfang des Außenrohrkörpers wird als besonders vorteilhaft angesehen, da die Fasern hier auf Zug belastet werden.

Grundsätzlich ist aber auch eine Verstärkung des gehärteten Außenrohrkörpers durch separate Verstärkungsbauteile oder eine Variation der Wanddicke möglich.

Bei einer für die Praxis besonders vorteilhaften Ausführungsform der erfindungsgemäßen Crashbox ist bzw. sind der Außenrohrkörper und/oder der Innenrohrkörper zumindest im Kontaktbereich zwischen dem Außenrohrkörper und dem Innenrohrkörper mit einer Beschichtung versehen. Vorzugsweise besteht die Beschichtung aus einer Lackierung, insbesondere einer elektrochemisch aufgebrachten Lackierung, vorzugsweise einer kathodischen Tauchlackierung. Die Beschichtung bzw. Lackierung kann auch aus einem Pulverlack bestehen.

Die erfindungsgemäße Crashbox kann auf den Einsatz eines Schmierstoffes zwischen dem Innenrohrkörper und dem Außenrohrkörper verzichten. Stattdessen kommt die Beschichtung bzw. Lackierung im Kontaktbereich zwischen Innenrohrkörper und Außenrohrkörper als Trenn- und Schmiermittel zum Einsatz. Es wird zumindest eines der beiden Bauteile, also der Innenrohrkörper oder der Außenrohrkörper, vor dem Zusammenbau beschichtet. Dies erfolgt, wie erwähnt, vorzugsweise mittels kathodischen Tauchlackierern oder eines Pulverlacks. Die Bauteile können vollständig oder nur bereichs- bzw. abschnittsweise beschichtet werden. Eine bereichsweise Beschichtung, bei der die Bauteile nicht über die komplette Länge beschichtet werden, ist vorteilhaft für nachgeschaltete Fügeoperationen, beispielsweise einer schweißtechnischen Verbindung der Crashbox mit einem Querträger.

Interne Untersuchungen haben gezeigt, dass die Beschichtung, insbesondere eine kathodische Tauchlackierung, bei hohen Geschwindigkeiten im Falle eines Anpralls nicht, wie bei langsamen Umformgeschwindigkeiten, abplatzt, sondern sehr gut haftet und trennt. Hierdurch wird der Reibbeiwert auf einem konstanten Niveau gehalten und es treten keine Aufschweißungen auf. Zudem wirkt sich vorteilhaft aus, dass die Beschichtung Korrosionsvorgänge unterbindet bzw. verhindert.

Weiterhin vorteilhaft ist, wenn der Innenrohrkörper und der Außenrohrkörper an einem Ende, insbesondere dem längsträgerseitigen Ende, konisch aufgeweitet sind. Dies erhöht die Seitensteifigkeit der Crashbox. Auch können Zugbelastungen, beispielsweise beim Abschleppen eines Kraftfahrzeugs, besser aufgenommen werden.

Vorteilhaft ist weiterhin, wenn am längsträgerseitigen Ende des Innenrohrkörpers ein Kragen ausgebildet ist, welcher das längsträgerseitige Ende des Außenrohrs umgreift. Auch diese Maßnahme trägt zur Stabilität der Crashbox bei. Vorteilhaft ist weiterhin, dass der Kragen das Widerlager für auftretende Zugkräfte, beispielsweise bei einem Abschleppvorgang, bildet.

Die Erfindung ist nachfolgend anhand von in den Zeichnungen dargestellten Ausführungsbeispielen näher beschrieben. Es zeigen:
- Figur 1: in perspektivischer Darstellungsweise eine erste Ausführungsform einer erfindungsgemäßen Crashbox;
- Figur 2: die Crashbox gemäß der Darstellung von Figur 1 im Längsschnitt;
- Figur 3: wiederum in perspektivischer Darstellungweise eine zweite Ausführungsform einer erfindungsgemäßen Crashbox;
- Figur 4: die Crashbox gemäß der Darstellung von Figur 3 in einem Längsschnitt;
- Figur 5: eine dritte Ausführungsform einer erfindungsgemäßen Crashbox in der Perspektive;
- Figur 6: die Crashbox gemäß der Darstellung von Figur 5 in einem Längsschnitt;
- Figur 7: eine vierte Ausführungsform einer erfindungsgemäßen Crashbox in einem Längsschnitt;
- Figur 8: in der Seitenansicht eine weitere Ausführungsform einer erfindungsgemäßen Crashbox;
- Figur 9: die Crashbox gemäß der Figur 8 in einer perspektivischen Darstellungsweise und
- Figur 10: technisch vereinfacht die erfindungsgemäße Crashbox gemäß den Figuren 8 und 9 in einem Längsschnitt.

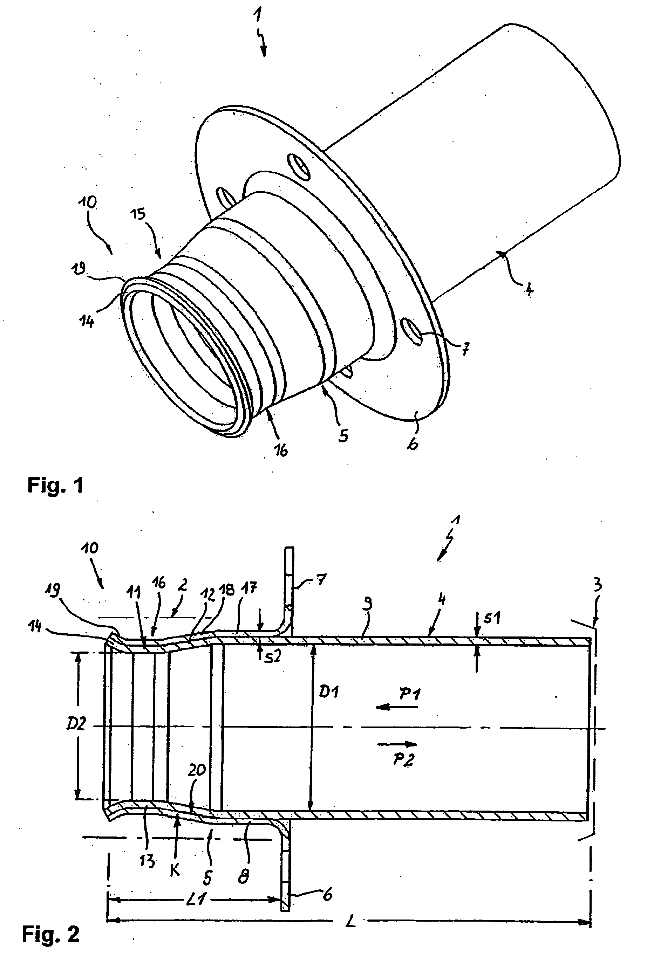

In den Figuren 1 und 2 ist eine erste Ausführungsform einer erfindungsgemäßen Crashbox 1 dargestellt. Eine solche Crashbox 1 kommt innerhalb eines hier nicht dargestellten Stoßfängers eines Kraftfahrzeugs zwischen einem hier andeutungsweise dargestellten Längsträger 2 des Kraftfahrzeugrahmens und einem Stoßfängerquerträger 3 als energieabsorbierendes Deformationselement zum Einsatz.

Die Crashbox 1 umfasst einen Innenrohrkörper 4 und einen den Innenrohrkörper 4 auf einem Teilabschnitt L1 seiner Länge L umschließenden Außenrohrkörper 5. Der Innenrohrkörper 4 ist im Außenrohrkörper 5 gehalten und relativ zum Außenrohrkörper 5 verlagerbar. Die Aufprallrichtung innerhalb eines Kraftfahrzeugs ist durch den Pfeil P1 gekennzeichnet.

An den Außenrohrkörper 5 schließt sich querträgerseitig einstückig eine Flanschplatte 6 an. Die Flanschplatte 6 ist kreisrund ausgeführt und mit Montageöffnungen 7 zur Festlegung der Crashbox 1 am Längsträger 2 versehen. Der Außenrohrkörper 5 ist innerhalb des Längsträgers 2 angeordnet und liegt mit der Flanschplatte 6 stirnseitig am Längsträger 2 an.

Die Wand 8 des Außenrohrkörpers 5 ist dünner ausgeführt als die Wand 9 des Innenrohrkörpers 4. Die Wandstärke der Wand 9 ist mit s1 und die Wandstärke der Wand 8 ist mit s2 gekennzeichnet.

Am längsträgerseitigen Ende 10 im Bereich des Teilabschnitts L1 ist der Innenrohrkörper 4 im Durchmesser reduziert und weist eine sich über den Umfang ringförmig erstreckende Einschnürung 11 auf. Der Durchmesser verringert sich vom Durchmesser D1, dem generellen Durchmesser des Innenrohrkörpers 4, zum Durchmesser D2 im Bereich der Einschnürung 11. Die Einschnürung 11 umfasst einen sich konisch verjüngenden Längenabschnitt 12 und einen zylindrischen Längenbereich 13, an den sich zum längsträgerseitigen Ende 10 hin eine konische Erweiterung 14 anschließt. Die Kontur des Außenrohrkörpers 5 ist an die Kontur der Einschnürung 11 angepasst, so dass der Außenrohrkörper 5 im Kontaktbereich K zwischen Innenrohrkörper 4 und Außenrohrkörper 5 über den Teilabschnitt L1 vollflächig am Innenrohrkörper 4 anliegt.

Die Wand 8 des Außenrohrkörpers 5 weist ein Formelement 15 in Form einer nach innen gerichteten, umlaufenden Einformung 16 auf, die in die Einschnürung 11 des Innenrohrkörpers 4 eingreift. Der Außenrohrkörper 5 umfasst ausgehend vom Flansch 6 in Richtung zum längsträgerseitigen Ende 10 hin einen zylindrischen Längenabschnitt 17, der über einen sich konisch verjüngenden Längenabschnitt 18 in die zylindrisch gestaltete Einformung 16 übergeht. An die Einformung 16 schließt sich eine konische Erweiterung 19 an, die außen an der konischen Erweitung 14 des Innenrohrkörpers 4 anliegt und diese umschließt. Die Erweiterung 14 des Innenrohrkörpers 4 und die Erweiterung 19 des Außenrohrkörpers 5 sichern den Innenrohrkörper 4 im Außenrohrkörper 5 beim Auftreten von Zugkräften in Richtung des Pfeils P2, beispielsweise bei Abschleppvorgängen.

Der Außenrohrkörper 5 besteht aus einem hochfesten, gehärteten Stahlwerkstoff. Der Stahlwerkstoff des Außenrohrkörpers 5 besitzt eine 0,2%-Dehngrenze Rp_{0,2} von größer oder gleich 550 N/mm², insbesondere besitzt der Außenrohrkörper 5 eine 0,2%-Dehngrenze Rp_{0,2} von größer oder gleich 800 N/mm². Der sich einstückig an den Außenrohrkörper 5 anschließende Flansch 6 besteht aus dem gleichen gehärteten Stahlwerkstoff mit den gleichen Werkstoffeigenschaften.

Der Innenrohrkörper 4 besteht aus einem ungehärteten Stahlwerkstoff mit plastischem Verformungsvermögen und einer hohen Fließgrenze. Der Innenrohrkörper 4 kann auch aus einem Leichtmetallwerkstoff, insbesondere aus Aluminium oder Magnesium bestehen.

Der Innenrohrkörper 4 ist zumindest im Kontaktbereich K mit einer Beschichtung 20 in Form einer Lackbeschichtung versehen, die als kathodische Tauchlackierung ausgeführt ist. Die Beschichtung 20 fungiert im Kontaktbereich K zwischen Innenrohrkörper 4 und dem Außenrohrkörper 5 als Trenn- und Schmierschicht und unterstützt den Verformungsvorgang des Innenrohrkörpers 4 bei der Verlagerung durch den Außenrohrkörper 5 vorteilhaft, weil die Reibbeiwerte durch die Beschichtung 20 auf einem konstanten Niveau gehalten werden können. Zudem verhindert die Beschichtung 20 Korrosionsvorgänge.

Die Beschichtung 20 ist auf den Innenrohrkörper 4 aufgebracht worden, bevor der Innenrohrkörper 4 und der Außenrohrkörper 5 zusammengefügt und zur Crashbox 1 komplettiert worden sind. Auch der Außenrohrkörper 5 kann im Kontaktbereich K mit einer Beschichtung 20 versehen sein, die vor dem Zusammenfügen der Bauteile aufgebracht worden ist. Die Beschichtung 20 fungiert grundsätzlich als Trennschicht zwischen dem Innenrohrkörper 4 und dem Außenrohrkörper 5.

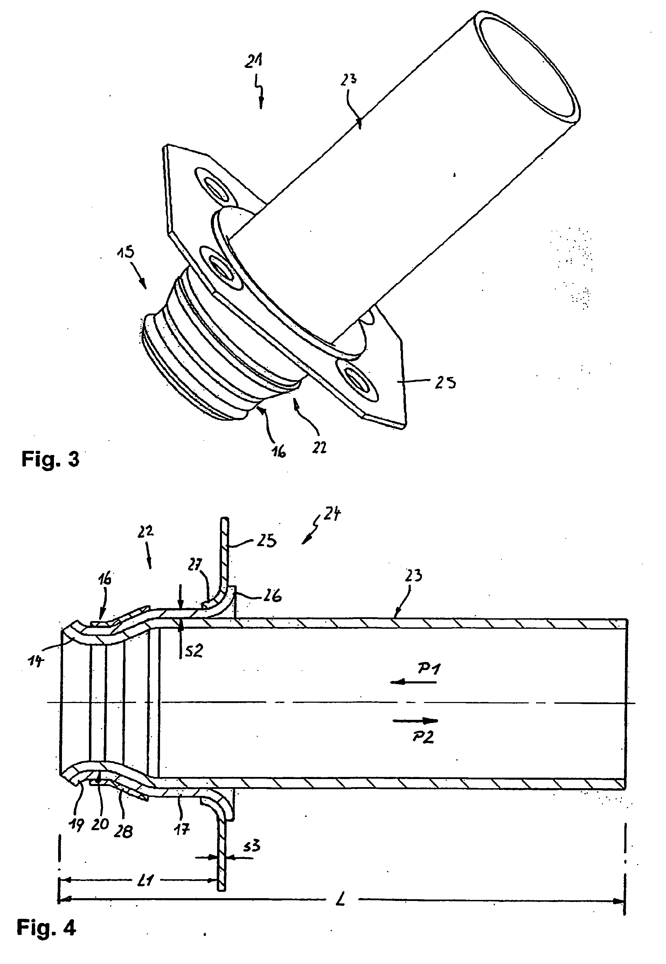

Die aus den Figuren 3 und 4 ersichtliche Crashbox 21 entspricht vom grundsätzlichen Aufbau der zuvor beschriebenen. Die Crashbox 21 umfasst einen in einem Außenrohrkörper 22 gehaltenen Innenrohrkörper 23. Der Innenrohrkörper 23 ist relativ zum Außenrohrkörper 22 verlagerbar. Bei der Verlagerung infolge eines Anpralls in Pfeilrichtung P1 wird der Innenrohrkörper 23 durch den als Formwerkzeug fungierenden Außenrohrkörper 22 verformt. Die Stoßenergie wird so in Verformungsenergie umgewandelt und abgebaut.

Der Innenrohrkörper 23 besteht aus einem Stahlwerkstoff oder einem Leichtmetallwerkstoff, insbesondere Aluminium oder Magnesium.

Der Außenrohrkörper 22 besteht aus einem gehärteten Stahlwerkstoff, wobei der Stahlwerkstoff eine 0,2 %-Dehngrenze Rp_{0,2} von größer oder gleich 550 N/mm², insbesondere größer oder gleich 800 N/mm², besitzt.

Am querträgerseitigen Ende 24 des Außenrohrkörpers 22 ist ein Flansch 25 mit dem Außenrohrkörper 22 gefügt. Dies erfolgt insbesondere schweißtechnisch. Der Außenrohrkörper 22 weist am querträgerseitigen Ende 24 einen nach außen umgestellten Kragen 26 auf, an dem sich der Flansch 25 mit einem ringförmig eingezogenen Kranz 27 abstützt. Hier ist der Flansch 25 mit dem Außenrohrkörper 22 gefügt. Die Wandstärke s3 des Flansches 25 ist dünner als die Wandstärke s2 des Außenrohrkörpers 22, und zwar um ca. 1/3. Dies ermöglicht eine zusätzliche Gewichtseinsparung.

Ansonsten entspricht die Ausführungsform und die konstruktive Gestaltung der Crashbox 21 der zuvor anhand der Figuren 1 und 2 beschriebenen Ausführungsform, so dass einander entsprechende Bauteile bzw. Bauteilkomponenten die gleichen Bezugszeichen tragen,

Der Außenrohrkörper 22 und/oder der Innenrohrkörper 23 sind zumindest im Kontaktbereich K mit einer Beschichtung 20 aus Lack versehen.

Die Crashbox 21 ist außen im Bereich des Formelements 15 bzw. der Einformung 16 mit einer partiellen Verstärkung 28 versehen. Die Verstärkung 28 kann aus einer Wicklung aus einem Faserwerkstoff, vorzugsweise aus einem kohlenstofffaserverstärktem Kunststoff, bestehen. Grundsätzlich kann die Verstärkung 28 auch als Metallbauteil ausgeführt sein, beispielsweise in Form eines Spannbandes, welches den Außenrohrkörper 22 im Bereich der Einformung 16 umschließt. Die Verstärkung 28 kann mit dem Außenrohr 22 gefügt sein, beispielsweise kann die Verstärkung 28 am Außenumfang des Außenrohrkörpers 22 angeklebt oder angeschweißt sein.

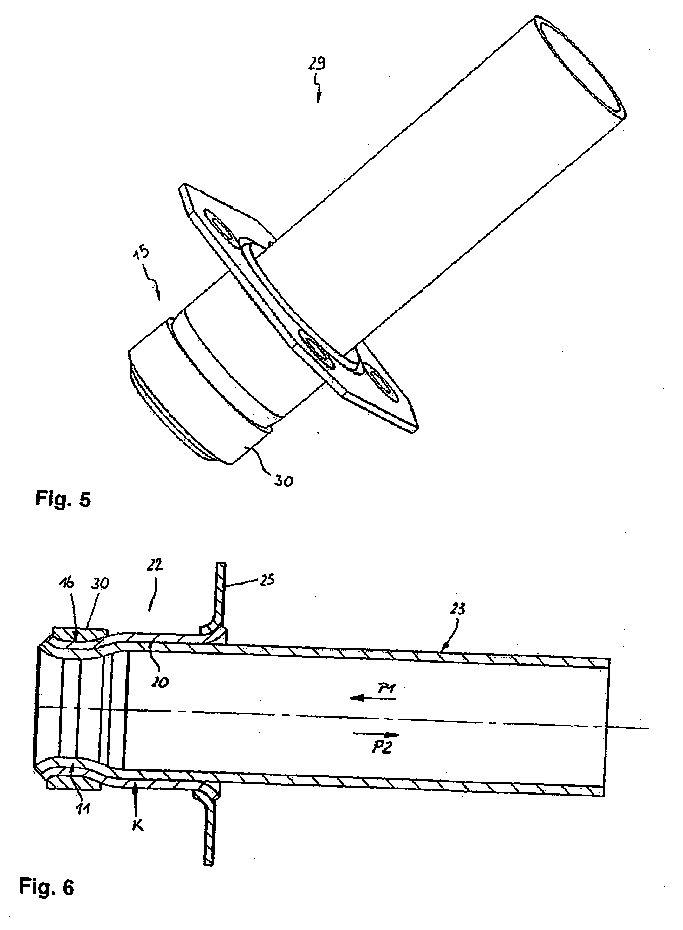

Eine grundsätzlich gleichartig aufgebaute Crashbox 29 zeigen auch die Figuren 5 und 6, so dass auch hier einander entsprechende Bauteile bzw. Bauteilkomponenten die gleichen Bezugszeichen tragen. Hier kommt eine Verstärkung 30 in Form eines gehärteten Stahlrings zum Einsatz, welches den Außenrohrkörper 22 im Bereich des Formelements 15 bzw. der Einformung 16 ringförmig umgreift. Der Außenrohrkörper 22 besteht aus einem gehärteten Stahlwerkstoff mit einer 0,2 %-Dehngrenze Rp_{0,2} von vorzugsweise größer oder gleich 800 N/mm², wohingegen der Innenrohrkörper 23 insbesondere aus einem Leichtmetallwerkstoff besteht. Auch hier ist im Kontaktbereich K zwischen dem Außenrohrkörper 22 und dem Innenrohrkörper 23 eine Beschichtung 20 vorgesehen.

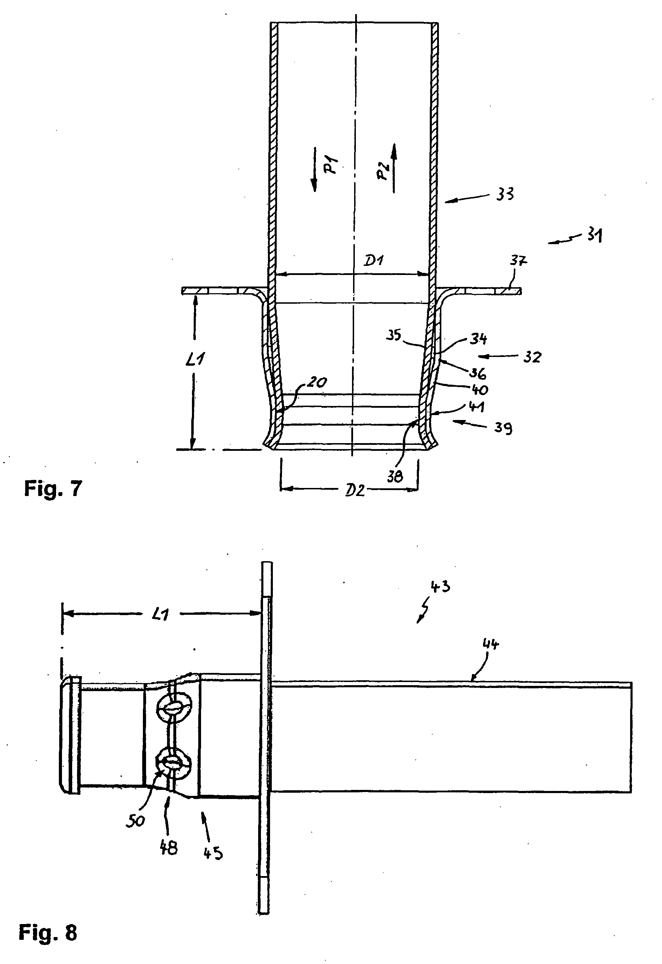

Eine weitere Alternative einer Crashbox 31 zeigt Figur 7. Im Unterschied zu der Crashbox 1, wie in den Figuren 1 und 2 dargestellt, umschließt der Außenrohrkörper 32 hier den Innenrohrkörper 33 im Teilabschnitt L1 nicht vollflächig. Zwischen dem Außenrohrkörper 32 und dem Innenrohrkörper 33 ist im Überlappungsbereich, also innerhalb des Teilabschnitts L1, eine ringförmig umlaufende Freifläche 34 vorgesehen. Die Freifläche 34 ist zwischen dem sich konisch verjüngenden Längenabschnitt 35 des Innenrohrkörpers 33 und dem flanschseitigen Längenabschnitt 36 des Außenrohrkörpers 32 ausgebildet, wohingegen der Außenrohrkörper 32 und der Innenrohrkörper 33 im Bereich des Flansches 37 sowie im Bereich der Einschnürung 38 und des Formelements 39 aneinander anliegen. Der zylindrische Längenabschnitt 36 des Außenrohrkörpers 32 ist länger ausgeführt und geht über einen kürzeren, jedoch steiler verlaufenden, konischen Längenabschnitt 40 in die Einformung 41 über. Bei einem Anprall in Pfeilrichtung P1 wird der Innenrohrkörper 33 durch das Formelement 39 bzw. die Einformung 41 im Außenrohrkörper 32 geschoben. Der Durchmesser des Innenrohrkörpers 33 erweitert sich hier vom Durchmesser D2 im Bereich der Einschnürung 38 zum vollen Durchmesser D1 am querträgerseitigen Ende 42 des Innenrohrkörpers 33. Durch diese ansteigende Durchmesservergrößerung und den damit einhergehenden langsamen Anstieg der Umformkraft kann der so genannte Haftpeak bzw. Anfangskraftpeak verringert bzw. im Gesamtkraftverlauf eliminiert werden.

Erfindungsgemäß besteht der Außenrohrkörper 32 aus einem gehärteten Stahlwerkstoff. Der Innenrohrkörper 31 besteht aus einem demgegenüber weicheren Metall, beispielsweise einem Stahl oder einem Leichtmetall. Hier ist der Außenrohrkörper 32 und/oder der Innenrohrkörper 33 zumindest an den miteinander in Kontakt gelangenden Flächen mit einer Beschichtung 20 versehen.

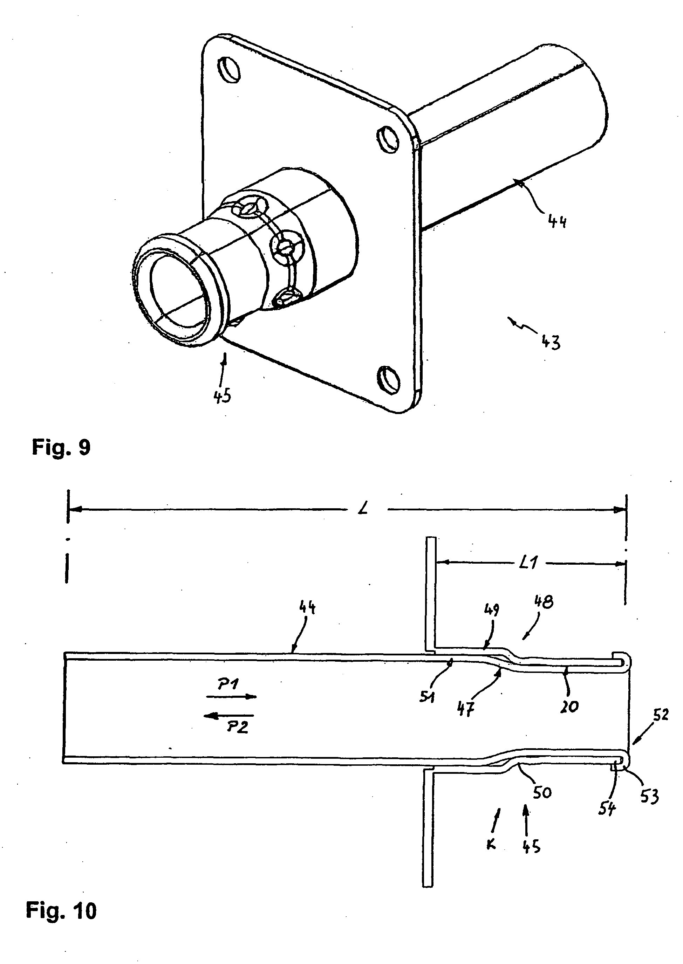

In den Figuren 8 bis 10 ist eine Crashbox 43 dargestellt mit einem Innenrohrkörper 44 und einem Außenrohrkörper 45, wobei der Innenrohrkörper 44 im Außenrohrkörper 45 in Pfeilrichtung P1 verlagerbar ist. Der Außenrohrkörper 45 besitzt einen Flansch 46 zur direkten oder indirekten Anbindung an einen Kraftfahrzeuglängsträger.

Der Innenrohrkörper 44 ist im Außenrohrkörper 45 über einen Teilabschnitt L1 seiner Länge L geführt. Dieser Teilabschnitt L1 des Innenrohrkörpers 44 ebenso wie der des Außenrohrkörpers 45 ist innerhalb des Längsträgers des Kraftfahrzeugs angeordnet. Im Teilabschnitt L1 ist der Innenrohrkörper 44 mittels einer umfangsseitigen Einschnürung 47 im Durchmesser reduziert. Am Außenrohrkörper 45 sind Formelemente 48 vorgesehen, welche in die Einschnürung 47 eingreifen. Jedes Formelement 48 ist durch eine aus der Wand 49 des Außenrohrkörpers 45 geformte, nach innen gerichtete, kalottenartige Einformung 50 gebildet. Die Formelemente 48 sind auf einem Teilkreis über den Umfang des Außenrohrkörpers 45 versetzt angeordnet. An den Einformungen 50 wird die Wand 51 des Innenrohrkörpers 44 bei einer Verlagerung durch den Außenrohrkörper 45 verformt und hierbei Stoßenergie in Verformungsenergie umgewandelt.

Am längsträgerseitigen Ende 52 des Innenrohrkörpers 44 ist ein umlaufender Kragen 53 ausgebildet, welcher das längsträgerseitige Ende 54 des Außenrohrkörpers 45 umgreift. Das längsträgerseitige Ende 52 des Innenrohrkörpers 44 fungiert so als Widerlager für in Pfeilrichtung P2 wirkende Zugkräfte, beispielsweise bei Abschleppvorgängen.

Wie bei allen Ausführungsformen besteht auch bei der Crashbox 43 der Außenrohrkörper 45 aus einem gehärteten Stahlwerkstoff und weist vorteilhafterweise eine 0,2 %-Dehngrenze Rp_{0,2} auf von größer oder gleich 550 N/mm², insbesondere größer oder gleich 800 N/mm². Der Innenrohrkörper 44 besteht aus einem Stahlwerkstoff oder einem Leichtmetall, insbesondere aus Aluminium. Eine Beschichtung 20 im Kontaktbereich K zwischen dem Innenrohrkörper 44 und dem Außenrohrkörper 45 fungiert als Trennschicht, welche sich vorteilhaft auf die Reibvorgänge bei der Verlagerung des Innenrohrkörpers 44 im Außenrohrkörper 45 und der Umformung des Innenrohrkörpers 44 auswirkt.

### Bezugszeichen:

- 1 -: Crashbox
- 2 -: Längsträger
- 3 -: Querträger
- 4 -: Innenrohrkörper
- 5 -: Außenrohrkörper
- 6 -: Flansch
- 7 -: Montageöffnung
- 8 -: Wand v. 5
- 9 -: Wand v. 4
- 10 -: längsträgerseitiges Ende v. 1
- 11 -: Einschnürung
- 12 -: konischer Längenabschnitt v. 11
- 13 -: zylindrischer Längenabschnitt v. 11
- 14 -: Erweiterung
- 15 -: Formelement
- 16 -: Einformung
- 17 -: zylindrischer Längenabschnitt v. 5
- 18 -: konischer Längenabschnitt v. 5
- 19 -: Erweiterung
- 20 -: Beschichtung
- 21 -: Crashbox
- 22 -: Außenrohrkörper
- 23 -: Innenrohrkörper
- 24 -: querträgerseitiges Ende v. 22
- 25 -: Flansch
- 26 -: Kragen
- 27 -: Kranz
- 28 -: Verstärkung
- 29 -: Crashbox
- 30 -: Verstärkung
- 31 -: Crashbox
- 32 -: Außenrohrkörper
- 33 -: Innenrohrkörper
- 34 -: Freifläche
- 35 -: Längenabschnitt v. 33
- 36 -: Längenabschnitt v. 32
- 37 -: Flansch
- 38 -: Einschnürung
- 39 -: Formelement
- 40 -: konischer Längenabschnitt v. 32
- 41 -: Einformung
- 42 -: querträgerseitiges Ende v. 33
- 43 -: Crashbox
- 44 -: Innenrohrkörper
- 45 -: Außenrohrkörper
- 46 -: Flansch
- 47-: Einschnürung
- 48 -: Formelement
- 49 -: Wand v. 45
- 50 -: Einformung
- 51 -: Wand v. 44
- 52 -: längsträgerseitiges Ende v. 44
- 53 -: Kragen
- 54 -: längsträgerseitiges Ende v. 45

- D1 -: Duchmesser v. 4, 23, 33, 44
- D2 -: Durchmesser v. 11, 38, 47
- L -: Länge v. 4, 23, 33, 44
- L1 -: Teilabschnitt
- P1 -: Pfeil
- P2 -: Pfeil
- K -: Kontaktbereich
- s1 -: Wandstärke v. 8
- s2 -: Wandstärke v. 9
- s3 -: Wandstärke v. 25

## Patentansprüche

1. Crashbox zur Eingliederung zwischen dem Stoßfängerquerträger und einem Fahrzeuglängsträger eines Kraftfahrzeugs, welche einen in einem Außenrohrkörper (5, 22, 32, 45) gehaltenen Innenrohrkörper (4, 23, 33, 44) umfasst, wobei der Innenrohrkörper (4, 23, 33, 44) und der Außenrohrkörper (5, 22, 32, 45) relativ zueinander verlagerbar sind, **dadurch gekennzeichnet, dass** der Außenrohrkörper (5, 22, 32, 45) aus einem gehärteten Stahlwerkstoff besteht.

2. Crashbox nach Anspruch 1,**dadurch gekennzeichnet, dass** der Außenrohrkörper (5, 22, 32, 45) eine 0,2 %-Dehngrenze Rp_{0,2} von größer oder gleich 550 N/mm² besitzt.

3. Crashbox nach Anspruch 1 oder 2, **dadurch gekennzeichnet, dass** der Außenrohrkörper (5, 22, 32, 45) eine 0,2 %-Dehngrenze Rp_{0,2} von größer oder gleich 800 N/mm² besitzt.

4. Crashbox nach wenigstens einem der Ansprüche 1 bis 3, **dadurch gekennzeichnet, dass** sich an den Außenrohrkörper (5, 22, 32, 45) eine Flanschplatte (6, 25, 37, 46) anschließt und die Flanschplatte (6, 25, 37, 46) aus einem gehärteten Stahlwerkstoff besteht.

5. Crashbox nach Anspruch 4, **dadurch gekennzeichnet, dass** die Flanschplatte (6, 37) einstückiger Bestandteil des Außenrohrkörpers (5, 32) ist.

6. Crashbox nach Anspruch 4, **dadurch gekennzeichnet, dass** die Flanschplatte (25, 46) mit dem Außenrohrkörper (22, 45) gefügt ist.

7. Crashbox nach wenigstens einem der Ansprüche 1 bis 6, **dadurch gekennzeichnet, dass** der Innenrohrkörper (4, 23, 33, 44) aus einem Stahlwerkstoff besteht.

8. Crashbox nach wenigstens einem der Ansprüche 1 bis 6, **dadurch gekennzeichnet, dass** der Innenrohrkörper (4, 23, 33, 44) aus einem Leichmetallwerkstoff besteht.

9. Crashbox nach wenigstens einem der Ansprüche 1 bis 8, **dadurch gekennzeichnet, dass** die Wand (s2) des Außenrohrkörpers (5) dünner ist als die Wand (s1) des Innenrohrkörpers (4).

10. Crashbox nach wenigstens einem der Ansprüche 1 bis 9, **dadurch gekennzeichnet, dass** der Innenrohrkörper (4, 23, 33, 44) zumindest einen Längenabschnitt (L1) mit einer umfangsseitigen Einschnürung (11, 38, 47) aufweist und am Außenrohrkörper (5, 22, 32, 45) zumindest ein Formelement (15, 39, 48) vorgesehen ist, welches in die Einschnürung (11, 38, 47) eingreift.

11. Crashbox nach Anspruch 10, **dadurch gekennzeichnet, dass** das Formelement (15, 39, 48) durch einen aus der Wand (8, 49) des Außenrohrkörpers (5, 22, 32, 45) geformten und nach innen gerichteten Einformung (16, 41, 50) gebildet ist.

12. Crashbox nach wenigstens einem der Ansprüche 1 bis 11, **dadurch gekennzeichnet, dass** am Außenrohrkörper (22) eine partielle Verstärkung (28, 30) vorgesehen ist.

13. Crashbox nach Anspruch 10 bis 12, **dadurch gekennzeichnet, dass** die Verstärkung (28, 30) außen am Außenrohrkörper (22) im Bereich des Formelements (15) vorgesehen ist.

14. Crashbox nach wenigstens einem der Ansprüche 1 bis 13, **dadurch gekennzeichnet, dass** der Außenrohrkörper (5, 22, 32, 45) und /oder der Innenrohrkörper (4, 23, 33, 44) zumindest im Kontaktbereich (K) zwischen dem Außenrohrkörper (5, 22, 32, 45) und dem Innenrohrkörper (4, 23, 33, 44) mit einer Beschichtung (20) versehen ist bzw. sind.

15. Crashbox nach Anspruch 14, **dadurch gekennzeichnet, dass** die Beschichtung (20) eine Lackbeschichtung ist.

16. Crashbox nach wenigstens einem der Ansprüche 1 bis 15, **dadurch gekennzeichnet, dass** der Innenrohrkörper (4, 23, 33, 44) und der Außenrohrkörper (5, 22, 32, 45) an einem Ende konisch erweitert sind.

17. Crashbox nach wenigstens einem der Ansprüche 1 bis 16, **dadurch gekennzeichnet, dass** der Außenrohrkörper (5, 22, 32, 45) innerhalb eines Längsträgers (2) angeordnet ist.

18. Crashbox nach wenigstens einem der Ansprüche 1 bis 17, **dadurch gekennzeichnet, dass** am längsträgerseitigen Ende (52) des Innenrohrkörpers (44) ein Kragen (53) ausgebildet ist, welcher das längsträgerseitige Ende (54) des Außenrohrkörpers (45) umgreift.

19. Crashbox nach wenigstens einem der Ansprüche 1 bis 18, **dadurch gekennzeichnet, dass** der Innenrohrkörper (4, 23) und der Außenrohrkörper (5, 22) im Kontaktbereich (K) vollflächig aneinander liegen.

20. Crashbox nach wenigstens einem der Ansprüche 1 bis 18, **dadurch gekennzeichnet, dass** im Überlappungsbereich von Außenrohrkörper (32) und Innenrohrkörper (33) eine ringförmige Freifläche (34) zwischen dem Innenrohrkörper (33) und dem Außenrohrkörper (32) vorgesehen ist.

## Claims

1. A crash box for installation between a bumper cross beam and a side rail of a motor vehicle, said crash box comprising an inner tube (4, 23, 33, 44) held in an outer tube (5, 22, 32, 45), with the inner (4, 23, 33, 44) and outer (5, 22, 32, 45) tubes being movable in relation to one another, **characterised in that** the outer tube (5, 22, 32, 45) is made of a hardened steel material.

2. Crash box according to claim 1, **characterised in that** the outer tube (5, 22, 32, 45) has a 0.2% proof stress Rp_{0,2} greater than or equal to 550 N/mm².

3. Crash box according to claim 1 or 2, **characterised in that** the outer tube (5, 22, 32, 45) has a 0.2% proof stress Rp_{0,2} of greater than or equal to 800 N/mm².

4. Crash box according to at least one of claims 1 to 3, **characterised in that** a flange plate (6, 25, 37, 46) is attached to the outer tube (5, 22, 32, 45) and the flange plate (6, 25, 37, 46) is made of a hardened steel material.

5. Crash box according to claim 4, **characterised in that** the flange plate (6, 37) forms a single-piece construction with the outer tube (5, 32).

6. Crash box according to claim 4, **characterised in that** the flange plate (25, 46) is joined to the outer tube (22, 45).

7. Crash box according to at least one of claims 1 to 6, **characterised in that** the inner tube (4, 23, 33, 44) is made of a steel material.

8. Crash box according to at least one of claims 1 to 6, **characterised in that** the inner tube (4, 23, 33, 44) is made of a light metal material.

9. Crash box according to at least one of claims 1 to 8, **characterised in that** the wall (s2) of the outer tube (5) is thinner than the wall (s1) of the inner tube (4).

10. Crash box according to at least one of claims 1 to 9, **characterised in that** the inner tube (4, 23, 33, 44) has at least one longitudinal section (L1) with a circumferential necking (11, 38, 47) and at least one form element (15, 39, 48) is provided on the outer tube (5, 22, 32, 45) which engages in the necking (11, 38, 47).

11. Crash box according to claim 10, **characterised in that** the form element (15, 39, 48) is composed by a cavity (16, 41, 50) formed out of the wall (8, 49) of the outer tube (5, 22, 32, 45) and directed inwardly.

12. Crash box according to at least one of claims 1 to 11, **characterised in that** a partial reinforcement (28, 30) is provided on the outer tube (22).

13. Crash box according to claims 10 to 12, **characterised in that** the reinforcement (28, 30) is provided externally on the outer tube (22) in the area of the form element (15).

14. Crash box according to at least one of claims 1 to 13, **characterised in that** the outer tube (5, 22, 32, 45) and/or the inner tube (4, 23, 33, 44) has/have a coating (20) at least in the a contact zone (K) between the outer tube (5, 22, 32, 45) and the inner tube (4, 23, 33, 44).

15. Crash box according to claim 14, **characterised in that** the coating (20) is a coat of varnish.

16. Crash box according to at least one of claims 1 to 15, **characterised in that** the inner tube (4, 23, 33, 44) and the outer tube (5, 22, 32, 45) are conically widened at one end.

17. Crash box according to at least one of claims 1 to 16, **characterised in that** the outer tube (5, 22, 32, 45) is arranged within a longitudinal beam (2).

18. Crash box according to at least one of claims 1 to 17, **characterised in that** a collar (53) is formed at the longitudinal beam end (52) of the inner tube (44), said collar encompassing the longitudinal beam end (54) of the outer tube (45).

19. Crash box according to at least one of claims 1 to 18, **characterised in that** the inner tube (4, 23) and the outer tube (5, 22) are in full contact with each other in the contact zone (K).

20. Crash box according to at least one of claims 1 to 18, **characterised in that** an annular open space (34) is provided between the inner tube (33) and the outer tube (32) in the overlap area of the outer tube (32) and the inner tube (33).

## Revendications

1. Boîte-tampon dite "crashbox" destinée à être intégrée entre la traverse de pare-chocs et un longeron de véhicule automobile, qui comprend un corps tubulaire intérieur (4, 23, 33, 44) tenu dans un corps tubulaire extérieur (5, 22, 32, 45), ledit corps tubulaire intérieur (4, 23, 33, 44) et ledit corps tubulaire extérieur (5, 22, 32, 45) étant déplaçables l'un par rapport à l'autre,
**caractérisée en ce que** le corps tubulaire extérieur (5, 22, 32, 45) est en un matériau à base d'acier durci.

2. Crashbox selon la revendication 1, **caractérisée en ce que** le corps tubulaire extérieur (5, 22, 32, 45) possède une limite d'allongement à 0,2 % R_{p0,2} supérieure ou égale à 550 N/mm².

3. Crashbox selon la revendication 1 ou 2, **caractérisée en ce que** le corps tubulaire extérieur (5, 22, 32, 45) possède une limite d'allongement à 0,2 % R_{p0,2} supérieure ou égale à 800 N/mm².

4. Crashbox selon l'une au moins des revendications 1 à 3, **caractérisée en ce qu'**une plaque-bride (6, 25, 37, 46) se raccorde au corps tubulaire extérieur (5, 22, 32, 45), et **en ce que** la plaque-bride (6, 25, 37, 46) est en un matériau à base d'acier durci.

5. Crashbox selon la revendication 4, **caractérisée en ce que** la plaque-bride (6, 37) est un élément constitutif d'une seule pièce du corps tubulaire extérieur (5, 32).

6. Crashbox selon la revendication 4, **caractérisée en ce que** la plaque-bride (25, 46) est assemblée avec le corps tubulaire extérieur (22, 45).

7. Crashbox selon l'une au moins des revendications 1 à 6, **caractérisée en ce que** le corps tubulaire intérieur (4, 23, 33, 44) est en un matériau à base d'acier.

8. Crashbox selon l'une au moins des revendications 1 à 6, **caractérisée en ce que** le corps tubulaire intérieur (4, 23, 33, 44) est en un matériau métallique léger.

9. Crashbox selon l'une au moins des revendications 1 à 8, **caractérisée en ce que** la paroi (s₂) du corps tubulaire extérieur (5) est plus mince que la paroi (s₁) du corps tubulaire intérieur (4).

10. Crashbox selon l'une au moins des revendications 1 à 9, **caractérisée en ce que** le corps tubulaire intérieur (4, 23, 33, 44) comporte au moins un tronçon de longueur (L₁) doté d'un rétrécissement périphérique (11, 38, 47), et **en ce qu'**il est prévu sur le corps tubulaire extérieur (5, 22, 32, 45) au moins un élément conformé (15, 3 9, 48) qui s'engage dans le rétrécissement (11, 38, 47).

11. Crashbox selon la revendication 10, **caractérisée en ce que** l'élément conformé (15, 39, 48) est formé par une moulure (16, 41, 50) formée à partir de la paroi (8, 49) du corps tubulaire extérieur (5, 22, 32, 45) et dirigée vers l'intérieur.

12. Crashbox selon l'une au moins des revendications 1 à 11, **caractérisée en ce qu'**il est prévu un renforcement partiel (28, 30) sur le corps tubulaire extérieur (22).

13. Crashbox selon les revendications 10 à 12, **caractérisée en ce que** le renforcement (28, 30) est prévu à l'extérieur sur le corps tubulaire extérieur (22) dans la région de l'élément conformé (15).

14. Crashbox selon l'une au moins des revendications 1 à 13, **caractérisée en ce que** le corps tubulaire extérieur (5, 22, 32, 45) et/ou le corps tubulaire intérieur (4, 23, 33, 44) est/sont pourvu(s) d'un revêtement (20) au moins dans la zone de contact (K) entre le corps tubulaire extérieur (5, 22, 32, 45) et le corps tubulaire intérieur (4, 23, 33,44).

15. Crashbox selon la revendication 14, **caractérisée en ce que** le revêtement (20) est un revêtement de laque.

16. Crashbox selon l'une au moins des revendications 1 à 15, **caractérisée en ce que** le corps tubulaire intérieur (4, 23, 33, 44) et le corps tubulaire extérieur (5, 22, 32, 45) sont élargis sous forme conique à une extrémité.

17. Crashbox selon l'une au moins des revendications 1 à 16, **caractérisée en ce que** le corps tubulaire extérieur (5, 22, 32, 45) est agencé à l'intérieur d'un longeron (2).

18. Crashbox selon l'une au moins des revendications 1 à 17, **caractérisée en ce qu'**une collerette (53) est réalisée à l'extrémité (52) côté longeron du corps tubulaire intérieur (44), ladite collerette coiffant l'extrémité côté longeron (54) du corps tubulaire extérieur (45).

19. Crashbox selon l'une au moins des revendications 1 à 18, **caractérisée en ce que** le corps tubulaire intérieur (4, 23) et le corps tubulaire extérieur (5, 22) sont appliqués l'un contre l'autre sur toute leur surface dans la zone de contact (K).

20. Crashbox selon l'une au moins des revendications 1 à 18, **caractérisée en ce que**, dans la zone de chevauchement du corps tubulaire extérieur (32) et du corps tubulaire intérieur (33) il est prévu une surface libre (34) de forme annulaire entre le corps tubulaire intérieur (33) et le corps tubulaire extérieur (32).
